# EUROPÄISCHE PATENTANMELDUNG

(11) **EP 1 197 315 A2**
(43) Veröffentlichungstag der Anmeldung: **17.04.2002**
(21) Anmeldenummer: 01124219.5
(22) Anmeldetag: 15.10.2001
(51) Int. Cl.: B29C 70/30, B29B 15/10, B29B 11/16

(54) **Verfahren zur Herstellung von Vorformlingen aus Faserverbund-Materialien, sowie ein daraus hergestellter Vorforming**

(30) Priorität: 13.10.2000 DE 10050851
(71) Anmelder: EADS Deutschland GmbH, 81663 München (DE)
(72) Erfinder: Lorenz, Torsten, 86161 Augsburg (DE); Stadler, Franz, 85113 Böhmfeld (DE); Utecht, Stefan, 86910 Kaufering (DE)

(57) **Zusammenfassung**

Verfahren zur Herstellung von Vorformlingen aus Faserverbund-Halbzeugen und Harz, um diese nach dem Aushärten als Bauteil zu verwenden, wobei zunächst auf einer Arbeitsfläche (60) ein Gelege durch das abwechselnde Aufeinanderlegen von Lagen eines trockenen Faserverbund-Halbzeugen-Zuschnitts und von Harz-Schichten jeweils vorbestimmter Form gebildet wird, aus dem Gelege (3) durch Umformen entsprechender Teile (A, B, C, D) desselben und anschließende Aushärtung desselben einen vorbestimmten Vorformling (1) gebildet wird, wobei die Harz-Schichten eine Form aufweisen, die eine Verbindung von Halbzeug-Zuschnitten in deren Überdeckungs-Bereichen gewährleisten, und wobei die Harz-Schichten lokale Aussparungen aufweisen, um beim Umformen der einzelnen Profil-Teile (A, B, C, D) des Geleges im Bereich der lokalen Aussparungen Schubspannungen zwischen den Halbzeug-Lagen zu minimieren, sowie ein Vorformling, der nach dem Verfahren hergestellt ist.

## Beschreibung

Die Erfindung betrifft ein Verfahren zur Herstellung von Vorformlingen aus Faserverbund-Halbzeugen, sowie einen nach einem solchen Verfahren hergestellten Vorformling.

Je nach Zusammensetzung werden Faserverbundwerkstoffe als CFK (kohlefaserverstärkter Kunststoff), GFK (glasfaserverstärkter Kunststoff), AFK (aramidfaserverstärkte Kunststoffe), BFK (borfaserverstärkte Kunststoffe) bezeichnet. Ebenso gut können Hybridwerkstoffe (also eine Mischung dieser Werkstoffe wie z.B. CFK Gewebe mit eingewebten AFK Rovings u.a.) verwendet werden. Dabei werden die Faserbestandteile, im folgenden Fasern genannt, der Faserverbund-Halbzeuge aus Kohlefasern, Glasfasern, Aramid und/oder Borfasern gebildet. Sie können beispielsweise als Gewebe, als Multiaxialgelege oder als kettverstärkte unidirektionale Halbzeuge ausgebildet sein. Geeignete Harze sind beispielsweise alle Epoxidprepregharze.

Für die Herstellung von faserverstärkten Kunststoff-Bauteilen werden nach dem allgemeinen Stand der Technik textile Halbzeuge als Ausgangsmaterialien verwendet, die durch zumindest ein Gelege, Gewebe oder ein Gestrick, also allgemein ein textiles Flächengebilde gebildet werden. Die textilen Halbzeuge werden in eine Vorrichtung gelegt, die eine Negativ-Form des herzustellenden Bauteils darstellt, wobei diese bereits mit Harz versehen sind oder in der Vorrichtung mit Harz versehen werden. Nach einem Aushärtevorgang kann das ausgehärtete Material als Bauteil der Vorrichtung entnommen werden.

Ein Nachteil dieses Verfahrens ist, dass die Einzellagen hierbei einzeln mit Harz durchtränkt werden müssen und die Werker mit flüssigen gesundheitsgefährdenden Arbeitsstoffen (Harz) hantieren müssen. Auch kann die einzubringende flüssige Harzmenge je nach Einbringungsverfahren, beispielsweise von Hand mit Pinsel oder mittels Tränkeinrichtung, von Bauteil zu Bauteil und Arbeitsweise, stark variieren, so dass eine gleichbleibende Qualität des jeweils erzielten Ergebnisses nicht sicher gewährleistet werden kann.

Weiterhin gibt es aus dem allgemeinen Stand der Technik Verfahren, bei denen Vorformlinge aus mehreren Stücken und/oder Teilstücken von Faserverbund-Halbzeugen gebildet werden, bevor das Faserverbund-Halbzeug endgültig mit Harz versetzt wird. Vorformlinge sind Vorstufen des herzustellenden Bauteils, die bereits die Gestaltung des letzteren aufweisen. Diese können für Bauteile mit abwickelbarer, nicht abwickelbarer und nicht vollständig abwickelbarer Geometrie gebildet werden. Als abwickelbar bzw. nicht abwickelbar bezeichnet man dabei die Eigenschaft des Bauteils, als solches auf eine Rolle gewickelt und wieder abgewickelt werden zu können oder nicht. Zur Herstellung solcher Vorformlinge sind dabei verschiedene Verfahren bekannt:

Mittels der sogenannten Bindertechnik werden trockene Faserverbund-Halbzeuge mit Bindern, d.h. mit üblicherweise als Pulver vorliegenden Bindemitteln, versetzt und dann als Pakete zusammengelegt. In dieser Zusammensetzung werden sie beispielsweise durch eine entsprechende Erwärmung fixiert. Komplexe Bauteile werden von Hand oder mit Hilfe von Gummimembranen geformt. Die Bindertechnik hat den Nachteil, dass die Faserverbundhalbzeuge besonders präpariert werden müssen und das mit den Bindern versehene Material - vergleichbar den Prepregs - gekühlt gelagert werden müssen. Außerdem müssen die Binder speziell hergestellt und qualifiziert werden. Sie dürfen nicht zu unerwünschten Nebenreaktionen mit den später verwendeten Harzen führen. Dies ist problematisch, da nicht für jedes gebräuchliche Harzsystem eine geeignete Bindervariante zur Verfügung steht. In diesen Fällen sind bei Systemen mit Bindern Einbußen in ihren mechanischen Eigenschaft gegenüber dem gleichen Fasermaterial ohne Binder in Kauf zu nehmen.

Nach einem weiteren Verfahren können die trockenen Faserverbundhalbzeuge in einer gewünschten Zusammensetzung miteinander vernäht werden. Dabei können alle üblichen Nähtechniken, einschließlich Tufting, Häkeln oder Stricken, zum Einsatz kommen. Diese Methode hat den Nachteil, dass insbesondere zum räumlichen Nähen aufwendige Hilfswerkzeuge benötigt werden, deren Komplexität einen häufigen Wechsel der Einspannung oder der jeweiligen Vorrichtung erfordern und somit die Fehleranfälligkeit erhöhen. Zudem sind die Vorbereitungen von Nähvorgängen und die Nähvorgänge selbst arbeits- und zeitintensiv und damit auch kostenintensiv.

Die Erfindung hat die Aufgabe, ein verbessertes Verfahren zur Herstellung von Vorformlingen aus Faserverbundhalbzeugen sowie einen durch dieses hergestellten Vorformling bereitzustellen.

Die Aufgabe wird mit den Merkmalen der unabhängigen Patentansprüche gelöst. Weitere Ausführungsformen sind in den jeweiligen Unteransprüchen angegeben.

Die Erfindung hat gegenüber dem Stand der Technik den Vorteil, dass weder eine spezielle Präparation der Faserverbund-Halbzeuge mit Bindern noch ein Nähvorgang mit dem daraus entstehenden Aufwand erforderlich ist.

Ein weiterer Vorteil des Erfindungsgegenstands ist, dass die Rohmaterialien Harzfilm und Fasermaterial erst bei der Erzeugung der Preform zusammenkommen und somit die aufwendige Kühl-Lagerung entfällt. Die eingebrachte Harzmenge wird durch die Anzahl der Lagen des Harzfilmes mit dem entsprechenden Flächengewicht in g/m² eindeutig reproduzierbar eingebracht. Ebenfalls ist die Anwendung der Erfindung auch bei Harzsystemen möglich, welche nicht für die Bindertechnik geeignet sind, z.B. wenn Epoxidharzsysteme als Harzfilm-Halbzeug verwendet werden.

Im folgenden wird die Erfindung anhand der beigefügten Zeichnung beschrieben, die zeigen:
- Fig. 1: eine schematische Darstellung eines Halbzeug-Zuschnittes in perspektivischer Sicht, das als Ausgangsmaterial für das erfindungsgemäße Verfahren vorgesehen ist,
- Fig. 2: eine schematische Darstellung eines Harzfilm-Zuschnittes in perspektivischer Sicht, das als weiteres Ausgangsmaterial für das erfindungsgemäße Verfahren vorgesehen ist,
- Fig. 3: eine schematische Schnitt-Darstellung eines Geleges aus mehreren Lagen von Halbzeug-Zuschnitten und abwechselnd mit diesen aufgeschichteten Lagen aus Harz, das auf einer Arbeitsfläche angeordnet ist, um in nachfolgenden Verfahrensschritten einen Vorformling einer vorgegebenen Gestalt zu formen,
- Fig. 4: eine schematische Schnitt-Darstellung einer alternativen Gestaltung eines Geleges nach der Figur 3, das auf einem Aushärtewerkzeug positioniert ist und eine lokale Harzfilmaussparung aufweist, wobei in einem gegenüber dem Zustand des Geleges nach der Figur 3 weiteren Verfahrensschritt ein Bereich eines entsprechend überstehenden Halbzeug-Zuschnittes an einer entsprechenden Kantenfläche drapiert ist, um einen Fuß einer Preform zu bilden,
- Fig. 5a: eine Schnitt-Darstellung eines ersten Verfahrensschrittes zur Bildung eines Vorformlings mit einem Profil, das einen Versteifungsspant und beidseitig von diesem abstehende Fußlagen A und B zur Anbindung an eine Folge- bzw. Unterstruktur aufweist, bei dem ein Gelege aus Lagen von Halbzeug- und Harzfilm-Zuschnitten auf einer Arbeitsfläche positioniert sind,
- Fig. 5b: eine Darstellung des Geleges nach der Figur 5a nach einem weiteren Verfahrensschritt, bei dem entsprechend überstehende Lagen an einer entsprechenden Kante drapiert worden sind, um den Versteigungsspant des Vorformlings auszubilden,
- Fig. 5c: eine Darstellung des Geleges nach der Figur 5a bzw. 5b nach einem weiteren Verfahrensschritt, bei dem entsprechend überstehende Lagen zur Ausbildung von Fußlagen drapiert worden sind.

Durch das erfindungsgemäße Verfahren wird ein Gelege aus zumindest zwei Lagen eines trockenen Faserverbund-Halbzeugs und zumindest einer Lage Harz hergestellt, die als zunächst separate Bestandteile in einer Weise aufeinander geschichtet werden, dass aus dem daraus entstehenden Gelege in einem Drapier-Prozess der Vorformling 1 vorbestimmter Gestalt gebildet werden kann. Der Vorformling kann allgemein auch ein Vor-Vorformling, d.h. ein Zwischen-Erzeugnis zur Herstellung eines Vorformlings sein.

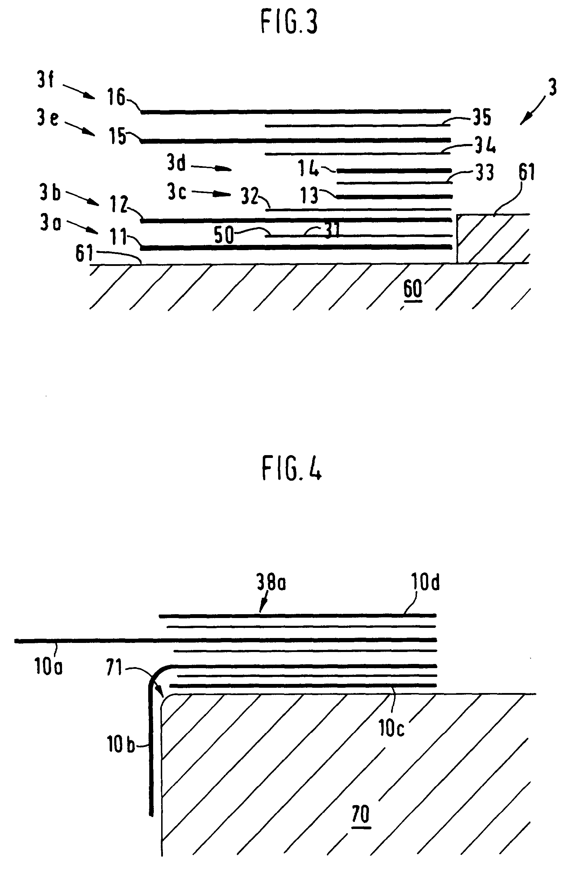

Im einzelnen werden zur erfindungsgemäßen Herstellung von Vorformlingen 1 auf einer Arbeitsfläche 60 abwechselnd Lagen aus vorgefertigtem, trockenen Faserverbund-Halbzeug und Harz-Schichten aufeinander gelegt, wobei die Harz-Schichten die Verbindung der einander zugewandten Seiten der Halbzeug-Zuschnitte in deren Überdeckungs-Bereichen gewährleistet, soweit sie keine Außenseiten des späteren Vorformlings darstellen. Die Harz-Schichten weisen also eine Form auf, die eine Verbindung von innen liegenden Halbzeug-Zuschnitten sowie der einander zugewandten Seiten von Außenseiten des Vorformlings bildenden Halbzeug-Zuschnitten in deren Überdeckungs-Bereichen gewährleisten. Die Harz-Schichten weisen lokale Aussparungen aufweisen, um beim Umformen der einzelnen Profil-Teile (A, B, C, D) des Geleges im Bereich der lokalen Aussparungen Schubspannungen zwischen den Halbzeug-Lagen zu minimieren der Fig. 3 ist beispielsweise ein derartiges Gelege dargestellt, das die Gelege-Schichten 3a, 3b, 3c, 3d, 3e, 3f aufweist.

Der Vorformling wird allgemein aus mehreren Teilen gebildet, die allgemein jeweils eine verschiedene Anzahl von Halbzeug-Lagen bzw. Harz-Schichten aufweisen, die sich aus der jeweiligen Form der trockenen Halbzeug-Zuschnitte und der Harz-Schichten ergeben. Diese Teile können winklig zueinander angeordnet sein. Auch können überstehende Bereiche von einzelnen Gelege-Schichten von einem anderen Bereich abgewinkelt werden, um aus ersteren Versteifungssegmente, Fußlagen, Flansche oder dergleichen zu bilden. Dabei ist es üblicherweise erforderlich, dass die Außenseiten der einzelnen Bereiche von den entsprechenden Bereichen der Halbzeug-Zuschnitte gebildet werden, d.h. dass die Harz-Schichten in den Bereichen zwischen äußeren Halbzeug-Lagen gelegen sind.

Um durch Umformung des Geleges, das aus den Halbzeug-Schichten und den Harzfilmen gebildet wird, den Vorformling vorbestimmter Form zu bilden, weisen die Harz-Schichten, die zur Verbindung der einander zugewandten Seiten der Halbzeug-Zuschnitte in deren Überdeckungs-Bereichen vorgesehen sind, dort lokale Aussparungen auf, um ein Abwinkeln oder Bewegen der entsprechenden Teile A, B, C, D des Geleges zu ermöglichen.

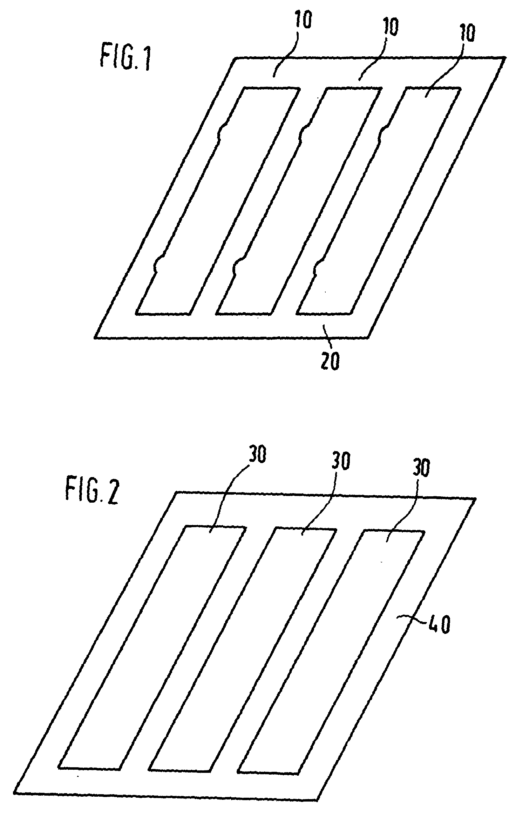

Zur Bildung eines derartigen Geleges 3 werden erfindungsgemäß die benötigten Halbzeug-Zuschnitte 10 von trockenen, d.h. kein Harz oder Klebstoff aufweisenden Faserverbund-Halbzeugen nach einer entsprechenden Konstruktionsvorgabe einzeln zugeschnitten. Dabei können die einzelnen Halbzeug-Zuschnitte 10 aus einer abgerollten Halbzeug-Rolle 20 ausgeschnitten werden (Fig. 1). Der Zuschnitt erfolgt beispielsweise auf einer ebenen Unterlage oder auf einem Cuttertisch. Die Halbzeug-Zuschnitte 10 können zunächst markiert und dann mit einem Messer von Hand oder maschinell ausgeschnitten werden.

Das zur Bildung des Geleges 3 zwischen den Halbzeug-Lagen vorzusehende Harz wird in Form eines Harzfilmes beim oder zwischen dem Aufeinanderlegen der Lagen von Halbzeug-Zuschnitten zwischen diese eingebracht. In einem weiteren Verfahrensschritt wird das Gelege 3 in einem Drapier-Prozess in die Form der herzustellenden Preform 1 gebracht. Hierzu kann das Gelege 3 auf einem entsprechenden Aushärte-Werkzeug 70 positioniert werden, das geeignete Kanten oder Anlageflächen aufweist, um den Drapier-Prozess zu unterstützen. Im anschließenden Aushärte-Schritt wird nach dem Stand der Technik ein Aushärtung des Vorformlings 1 erreicht. Aus dem Vorformling 1 kann anschließend das herzustellende Bauteil gebildet werden.

Der Harz-Film 30 kann auch vor einem Zuschnitt des trockenen Halbzeugs auf den vorgesehenen Überdeckungs-Bereich des Halbzeugs(10) aufgetragen werden, wobei anschließend das Zuschneiden des Halbzeug-Zuschnitts (10) erfolgt.

Erfindungsgemäß werden trockene Halbzeug-Zuschnitte verwendet, die wechselweise mit den Harz-Schichten aufeinandergelegt werden. Die Harz-Schichten werden vorzugsweise aus Harz-Filmen, d.h. aus Harzfilm-Zuschnitten derselben gebildet. Das Harz ist dazu vorgesehen, die einzelnen Halbzeug-Lagen miteinander zu verbinden. Dabei ist es gegebenenfalls vorgesehen, lokale Aussparungen der Harz-Filmes für das Umformen vorzusehen. Hierdurch lassen sich also die Umform-Eigenschaften des Geleges bzw. des herzustellenden Vorformlings gezielt steuern, da sich die trockenen Faserverbund-Halbzeuge in diesen Bereichen mit durch das Material vorbestimmten Reibungs-Schubwiderständen gegeneinander verschieben können.

Konstruktionsvorgabe für die Bildung der Halbzeug-Zuschnitte und gegebenenfalls der Harzfilm-Zuschnitte ist so definiert, dass bei einer vorbestimmten Anordnung der Zuschnitte oder der Gelege-Schichten die Bildung des herzustellenden Vorformlings 1 möglich ist und in nachfolgenden Verfahrensschritten erreicht wird.

Zum Aufbau des herzustellenden Vorformlings oder der Preform 1 werden Schichten von Halbzeug-Zuschnitten 10 und Harz-Schichten 30 auf einer vorzugsweise ebenen Arbeitsfläche 60 in einer vorgegebenen Reihenfolge zur Bildung des Geleges 3 mit einer vorgegebenen Dicke und Form aufeinandergelegt (vgl. Fig. 3). Die Arbeitsfläche 60 weist vorzugsweise eine Trennfolie 61 auf, die als Träger für den Vorformling dienen kann. Die Arbeitsfläche 60 weist zweckmäßigerweise ein Bezugssystem oder eine Referenz-Einrichtung auf, welches etwa durch einen Anschlag 61 oder durch eine Legefolie oder durch Laserpointer-Punkte (letztere beide nicht dargestellt) realisiert ist. Außerdem kann die Arbeitsfläche 60 ihrerseits mit einer Harz-Schicht oder einer Lage Harzfilm präpariert sein, um das Gelege 3 bzw. die Preform 1 während ihrer Bearbeitung zu fixieren.

Zunächst wird also ein erster trockener Halbzeug-Zuschnitt 11 auf die Arbeitsfläche 60 aufgelegt. Auf der Oberseite, d.h. der der Arbeitsfläche 60 abgewandten Seite desselben, kann bereits vor diesem Schritt wie oben dargestellt eine Harz-Schicht z.B. in Form eines Harzfilm-Zuschnitts 31 angebracht sein. Es ist aber auch möglich, eine solche Harz-Schicht erst nach der Positionierung des ersten Halbzeug-Zuschnitts 11 auf der Arbeitsfläche 60 vorzusehen . Dabei hat die erstgenannte Vorgehensweise den Vorteil, dass das Trägerpapier bzw. die Trägerfolie 50 des Harzfilm-Zuschnitts 30 den im allgemeinen sehr empfindlichen trockenen Halbzeug-Zuschnitt 10 beim Aufbringen auf die Arbeitsfläche 60 stabilisiert. Dieser Aspekt ist natürlich bei jeder Aufbringung eines Harzfilm-Zuschnittes 30 relevant.

Zur Aufbringung eines Harzfilm-Zuschnitts 30 auf den jeweiligen Halbzeug-Zuschnitt 10 werden entsprechende Harzfilm-Zuschnitte 30 aus einem Harzfilm 40 ausgeschnitten (Fig. 2), der wenigstens auf einer Seite auf einem Trägerpapier oder einer Trägerfolie 50 aufgebracht ist, und die einzelnen Harzfilm-Zuschnitte 30 jeweils auf zumindest einem Halbzeug-Zuschnitt 10 positioniert. Die Harzfilm-Zuschnitte 30 können Form und Ausmaß der Halbzeug-Zuschnitte 10 vollständig entsprechen. Es ist aber auch möglich, dass sie eine abweichende Form aufweisen, um jeweils nur Teilbereiche der Halbzeug-Zuschnitte 10 miteinander zu verbinden.

Anschließend wird jeweils eine Seite der Harzfilm-Zuschnitte 30, auf welcher kein Trägerpapier bzw. keine Trägerfolie angeordnet ist, mit dem jeweiligen Halbzeug-Zuschnitt 10 in der entsprechenden Lage zu diesem in Berührung gebracht und angedrückt, so dass die Harzfilm-Zuschnitte 30 auf den Halbzeug-Zuschnitten 10 haften. Zum Andrücken können beispielsweise eine Andrückrolle oder eine Vakuum-Membran (beide nicht dargestellt) verwendet werden. Alternativ ist es auch möglich, zuerst den Harzfilm 30 auf dem Halbzeug-Zuschnitt 20 aufzubringen und dann in einem gemeinsamen Arbeitsschritt die Halbzeug-Zuschnitte 10 und die Harzfilm-Zuschnitte 30 gleichzeitig zu erzeugen.

In einem ersten Schritt erhält man also bei dem Beispiel der Figur 3 zunächst eine erste Gelege-Schicht 3a mit einem ersten, mit seiner Unterseite auf der Arbeitsfläche 60 positionierten Halbzeug-Zuschnitt 11, auf dessen Oberseite ein erster Harzfilm-Zuschnitt 31 angebracht ist. Dabei kann auch noch an der Unterseite des ersten Halbzeug-Zuschnittes 11 eine weitere Harz-Schicht 30 vorgesehen sein. Der erste Harzfilm-Zuschnitt 31 kann noch ein Trägerpapier bzw. eine Trägerfolie 51 auf seiner Oberseite aufweisen. Die nach diesem Verfahrensschritt resultierende Schichtfolge von der Arbeitsfläche 60 aus gesehen ist also: Arbeitsfläche 60, optional eine Trennfolie 61 zur Fixierung des entstehenden Geleges 3, ein erster Halbzeug-Zuschnitt 11, ein erster Harzfilm-Zuschnitt 31 und ein erstes Trägerpapier bzw. eine Trägerfolie 51.

Im nächsten Schritt werden das Trägerpapier bzw. die Trägerfolie 51 entfernt und ein zweiter Halbzeug-Zuschnitt 12 aufgebracht. Dieser kann wie schon der erste Halbzeug-Zuschnitt 11 bereits mit einem zweiten oder weiteren Harzfilm-Zuschnitt 32 versehen sein oder nicht. In jedem Fall ist der zweite Harzfilm-Zuschnitt 32 auf der von dem ersten Halbzeug-Zuschnitt 11 abgewandten Seite des zweiten Halbzeug-Zuschnitts 12 angebracht. Zusätzlich kann auch ein weiterer oder dritter Harzfilm-Zuschnitt 32b auf der Unterseite dieses Halbzeug-Zuschnittes 12 angebracht sein (diese Konstellation ist in der Figur 3 nicht gezeigt). In diesem Fall sind im Bereich zwischen dem ersten 11 und dem zweiten 12 Halbzeug-Zuschnitt zwei Schichten von Harzfilm-Zuschnitten 32, 32b angeordnet. Auch ist es grundsätzlich möglich, alle Lagen von Halbzeug-Zuschnitten 10, 11, 12 jeweils nur auf der Unterseite mit einem Harzfilm-Zuschnitt 30 zu versehen. Schließlich sind Kombinationen der beschriebenen Vorgehensweisen denkbar.

Auf diese Weise wird ein Gelege 3 mit einer vorbestimmten Gelegedicke aus zumindest einer Gelegeschicht 3a, 3b, 3c, 3d, 3e, 3f gebildet. Jede Gelegeschicht weist einen Halbzeug-Zuschnitt 10 und zumindest einen Harzfilm-Zuschnitt 30 auf, der entweder auf der Oberseite, d.h. bezüglich des jeweiligen Halbzeug-Zuschnitts auf der jenseits der Arbeitsfläche 60 gelegenen Seite, oder auf dessen Unterseite oder auf beiden Seiten angeordnet ist.

Erfindungsgemäß kommt es nur darauf an, dass zwischen zwei Halbzeug-Zuschnitten 10, 11, 12 in dem jeweils gewünschten Bereich auch ein Harzfilm-Zuschnitt 30, 31, 32 angeordnet ist.

Die geschilderte Anordnung von Gelege-Schichten wird solange fortgesetzt, bis die gewünschte Schichtdicke für den herzustellenden Vorformling erreicht ist. Im Beispiel der Figur 3 liegen Gelege-Schichten 3a, 3b, 3c, 3d, 3e, 3f vor. So lassen sich beliebige Abstufungen, lokale Aufdickungen und Gurtlagen von Vorformlingen erzeugen. Im Ergebnis kann beispielsweise die in Fig. 3 dargestellte Struktur eines Vorformlings aus Halbzeug-Zuschnitten 10 bzw. 11, 12, 13, 14, 15, 16 und Harzfilm-Zuschnitten 30 bzw. 31, 32, 33, 34, 35 erzeugt werden.

Das nach einem oder mehreren des beschriebenen Arbeitsschritts gebildete vorgefertigte trockene Faserverbund-Gelege wird im Anschluss auf ein geeignetes Aushärtewerkzeug 70 transferiert und in Stufen in allen notwendigen Ebenen umgeformt bzw. drapiert (Figuren 4 und 5a-c). Die Form des Geleges 3 sowie die Art der Drapierung sowie der Umformung desselben auf dem Aushärtewerkzeug 70 ist so vorgesehen, dass dadurch die Form des herzustellenden Vorformlings aus dem Gelege 3 gebildet werden kann. Dies wird nachfolgend an Hand einiger Beispiele beschrieben:

Wie in dem in Fig.4 dargestellten Beispiel, ragen einzelne Halbzeug-Zuschnitte 10a und 10b aus einem inneren Stapel-Bereich von Halbzeug-Zuschnitten 10 oder einem inneren Überdeckungsbereich 38a heraus. Die Harzfilm-Zuschnitte 10c, 10d weisen jedoch alle nur eine kleinere und zwischen dieser und der Ausdehnung der hervorstehenden Halbzeug-Zuschnitte 15 und 17 liegende Längs-Erstreckung auf. Infolgedessen können die freien Enden der herausstehenden Halbzeug-Zuschnitte 10a und 10b frei verformt werden. Dadurch ist es möglich, dieselben um eine entsprechen vorgesehene Kante71 des Aushärtewerkzeugs 70 zu drapieren.

Eine weitere Ausführungsform eines Faserverbund-Geleges 3 mit Gelege-Schichten 4a, 4b, 4c, 4d, 4e und deren Handhabung zur Herstellung eines Vorformlings ist an Hand der Figuren 5a-5c dargestellt. Die Gelege-Schicht 4a weist dabei einen Halbzeug-Zuschnitt 21 und einen darüber angeordneten Harzfilm-Zuschnitt 41, die Gelege-Schicht 4b einen Halbzeug-Zuschnitt 22 und einen darüber angeordneten Harzfilm-Zuschnitt 42, die Gelege-Schicht 4c einen Halbzeug-Zuschnitt 23, die Gelege-Schicht 4d einen Harzfilm-Zuschnitt 44 und einen darüber angeordneten Halbzeug-Zuschnitt 24, die Gelege-Schicht 4e einen Harzfilm-Zuschnitt 45 und einen darüber angeordneten Halbzeug-Zuschnitt 25 auf.

Im einzelnen ist das Gelege 3 bzw. die Preform P nach den Fig. 5a-5c wie folgt aufgebaut: auf der Arbeitsfläche 60 bzw. dem Aushärtewerkzeug 70 ist zunächst ein erster Halbzeug-Zuschnitt 21 gelagert, welcher in seiner ebenen Erstreckung der Fläche eines inneren Überdeckungs-Bereichs 38b des Geleges 4 entspricht. Es folgen in der von der Arbeitsfläche wegführenden Richtung ein Harzfilm-Zuschnitt 21 derselben ebenen Erstreckung, ein zweiter über den Überdeckungsbereich 38b auf einer ersten Seite überstehenden Halbzeug-Zuschnitt 42, ein zweiter Harzfilm-Zuschnitt 42, dessen ebene Erstreckung zwischen der Erstreckung des Überdeckungsbereichs 38b und der ebenen Erstreckung des zweiten überstehenden Halbzeug-Zuschnitts 22 liegt, ein weiterer Halbzeug-Zuschnitt 23, dessen ebene Erstreckung der Fläche des inneren Überdeckungs-Bereich 38b entspricht, ein weiterer Harzfilm-Zuschnitt 44 mit der ebenen Erstreckung des Harzfilm-Zuschnitts 42, ein Halbzeug-Zuschnitt 24 mit der ebenen Erstreckung des Halbzeug-Zuschnitts 22 ist, ein vierter Harzfilm-Zuschnitt 24 und ein fünfter Halbzeug-Zuschnitt 25, deren ebene Erstreckungen der Fläche des inneren Überdeckungs-Bereich 38b entsprechen.

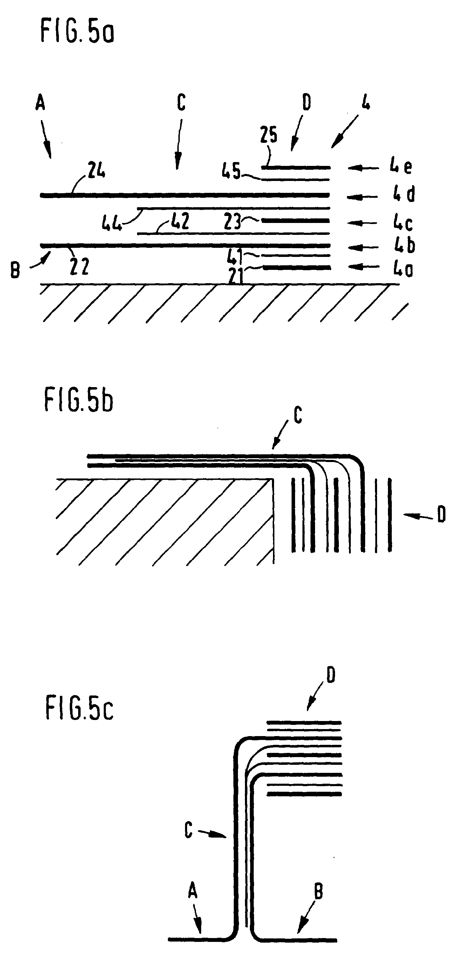

Es ragen also Teile einzelner Gelege-Schichten 4b, 4d, und zwar Bereiche der Halbzeug-Zuschnitte 22 und 24 und der Harzfilm-Zuschnitte 42 und 44 aus einem inneren Überdeckungs-Bereich 38b heraus, die von der Längserstreckung einer Mehrzahl von Gelege-Schichten 4a, 4c, 4e bestimmt wird. Aus diesen kann nachfolgend ein Anschlussteil D und ein Versteifungsteil oder - spant C sowie Fußlagen A, B gebildet werden. Der innere Überdeckungs-Bereich 38b, aus dem nachfolgend ein Anschlussteil D gebildet wird, wird von einem Gelege-Bereich bestimmt, der bei der Herstellung des Vorformlings als Gesamtheit behandelt werden soll. D.h. dessen Lagen werden in nachfolgenden Schritten zur Herstellung des Vorformlings 1 nicht getrennt. IN diesem Bereich 38b bilden die Halbzeug-Lagen 22, 23, 24 innen liegende Lagen. Die hervorstehenden Bereiche der Harzfilm-Zuschnitte 42 und 44 sind zwischen den hervorstehenden Bereichen der Halbzeug-Zuschnitte 22 und 24 angeordnet, so dass diese nach ihrer jeweiligen Nachbarschaft zur gegenseitigen Anlage gebracht werden können (Fig. 5b), obwohl sie in der Ausgangssituation keine unmittelbar benachbarten Lagen darstellen müssen. Dabei werden wiederum diejenigen Seiten aneinander angelegt und mittels Harz-Schichten miteinander verbunden, die bei dem herzustellenden Vorformling keine Außenseiten bilden.

Der zweite 22 und vierte 24 Halbzeug-Zuschnitt können also mittels des zweiten und dritten Harzfilm-Zuschnitt 42 und 44 in einem Teilbereich miteinander verbunden werden, obwohl sie beide im Stapel jeweils nur mit dem dritten Halbzeug-Zuschnitt 23 unmittelbar benachbart sind. Andererseits sind die herausstehenden Enden der Harzfilm-Zuschnitte 42, 44 kürzer als die herausstehenden Enden der Halbzeug-Zuschnitte 22, 24, so dass die über den Überdeckungs-Bereich 38b hinausragenden Enden der Halbzeug-Zuschnitte 22 und 24, wie in Fig. 5c dargestellt, weiter einzeln verformt werden können. So ist es beispielsweise möglich, aus einem ebenen Gelege 4 einen Vorformling mit einem Profil mit beidseitig abstehenden Fußlagen A und B zu bilden, bei welchem die Anbindung an eine Folge- bzw. Unterstruktur (nicht gezeigt) möglich ist.

Eine von vielen Anwendungsmöglichkeiten ist die Herstellung von nicht abwickelbaren Versteifungsprofilen, welche auf einem Beplankungsfeld ausgehärtet werden. Auch ist es möglich, solche Preforms als Pre-Preforms zu verwenden, und jeweils zu mehreren zu einer resultierenden Preform zusammenzusetzen.

Im Anschluss oder in einem nachfolgenden Schritt wird der Vorformling 1 mit zusätzlichen Harz imprägniert und ausgehärtet. Dabei wird bei der Aushärtung der Preform weiteres Harz injiziert oder auf andere Weise aufgebracht. Dabei kommt Harz nach dem Stand der Technik in Betracht, z.B. Epoxy-, Polyester-, Polyimid- oder Polyamid-Harze. Dabei können beliebige Verfahren nach dem Stand der Technik angewendet werden. Insbesondere kann das hierfür erforderliche Harz nach dem sogenannten Resin Film Infusion -Verfahren (RFI) in der Form der voranstehend genannten Harzfilme aufgebracht werden. Anwendbar sind aber auch Infusionstechniken zur Infusion von flüssigem Harz wie das Resin Transfer Moulding (RTM) oder das Resin Infusions-Verfahren (RI). Die Anwendbarkeit der jeweiligen Verfahren hängt von der Kompatibilität der verschiedenen verwendeten Harz-Systeme ab. Wenn diese gegeben ist, können also zwei oder mehr verschiedenen Harz-Systeme verwendet werden, wobei jedes Epoxidharz-System bei einer bestimmten Temperatur flüssig wird. Wenn Harz-Systeme verwendet werden, die im wesentlichen die gleiche chemische Zusammensetzung haben, können diese auch gemischt werden, so dass verschiedene Harze in einem Bauteil verwendet werden können.

Das Harz, welches für die Imprägnierung verwendet wird, kann mit dem Harz, welches für die Erstellung der Preform P verwendet wird, identisch sein. Es reicht aber grundsätzlich aus, wenn beide Harze sich chemisch vertragen, d.h. wenn sie eine für die Erzeugung des Faserverbundbauteils geeignete chemische Reaktion eingehen.

Der herzustellende Vorformling kann eine ganz oder teilweise nicht abwickelbare Geometrie aufweisen.

## Patentansprüche

1. Verfahren zur Herstellung von Vorformlingen aus Faserverbund-Halbzeugen und Harz, um diese nach dem Aushärten als Bauteil zu verwenden
**dadurch gekennzeichnet, dass**
zunächst auf einer Arbeitsfläche (60) ein Gelege durch das abwechselnde Aufeinanderlegen von Lagen eines trockenen Faserverbund-Halbzeugen-Zuschnitts und von Harz-Schichten jeweils vorbestimmter Form gebildet wird,
aus dem Gelege (3) durch Umformen entsprechender Teile (A, B, C, D) desselben und anschließende Aushärtung desselben einen vorbestimmten Vorformling (1) gebildet wird,
wobei die Harz-Schichten eine Form aufweisen, die eine Verbindung von innen liegenden Halbzeug-Zuschnitten sowie der einander zugewandten Seiten von Außenseiten des Vorformlings bildenden Halbzeug-Zuschnitten in deren Überdeckungs-Bereichen gewährleisten, und wobei die Harz-Schichten lokale Aussparungen aufweisen, um beim Umformen der einzelnen Profil-Teile (A, B, C, D) des Geleges im Bereich der lokalen Aussparungen Schubspannungen zwischen den Halbzeug-Lagen zu minimieren.

2. Verfahren zur Herstellung von Vorformlingen aus Faserverbund-Halbzeugen und Harz aus Gelege-Schichten vorgegebener Form nach dem Anspruch 1, **dadurch gekennzeichnet, dass** als trockenes Faserverbund-Halbzeug (10) ein Gewebe, ein Multiaxialgelege, ein Geflecht, eine Matte und/oder ein kettverstärktes unidirektionales Halbzeug verwendet wird.

3. Verfahren zur Herstellung von Vorformlingen aus Faserverbund-Halbzeugen und Harz aus Gelege-Schichten vorgegebener Form nach einem der voranstehenden Ansprüche, **dadurch gekennzeichnet, dass** die Harz-Schicht in form eines Harz-Filmes (30) zusammen mit einer Trägerfolie auf einen ersten Überdeckungs-Bereich eines Halbzeug-Zuschnittes (10) aufgetragen wird und nach dem Andrücken des Harz-Filmes die Trägerfolie entfernt wird.

4. Verfahren zur Herstellung von Vorformlingen aus Faserverbund-Halbzeugen und Harz aus Gelege-Schichten vorgegebener Form nach dem Anspruch 1 oder 2, **dadurch gekennzeichnet, dass** der Harz-Film (30) vor einem Zuschnitt des trockenen Halbzeugs auf den vorgesehenen Überdeckungs-Bereich des Halbzeugs(10) aufgetragen wird und anschließend das Zuschneiden des Halbzeug-Zuschnitts (10) erfolgt.

5. Verfahren zur Herstellung von Vorformlingen aus Faserverbund-Halbzeugen und Harz aus Gelege-Schichten vorgegebener Form nach einem der voranstehenden Ansprüche, **dadurch gekennzeichnet, dass** durch die Umformung abstehende Fußlagen erzeugt werden.

6. Verfahren zur Herstellung von Vorformlingen aus Faserverbund-Halbzeugen und Harz aus Gelege-Schichten vorgegebener Form nach einem der voranstehenden Ansprüche, **dadurch gekennzeichnet, dass** die Gelege (3) auf einer Arbeitsfläche (60) und das Umformen auf einem Aushärtewerkzeug (70) vorgenommen werden.

7. Verfahren zur Herstellung von Vorformlingen aus Faserverbund-Halbzeugen und Harz aus Gelege-Schichten vorgegebener Form nach einem der voranstehenden Ansprüche, **dadurch gekennzeichnet, dass** die Arbeitsfläche (60) eine Trennfolie (61) als Träger für das Gelege (3) aufweist.

8. Verfahren zur Herstellung von Vorformlingen aus Faserverbund-Halbzeugen und Harz aus Gelege-Schichten vorgegebener Form nach einem der voranstehenden Ansprüche, **dadurch gekennzeichnet, dass** die Arbeitsfläche (60) eine Referenz-Einrichtung aufweist.

9. Verfahren zur Herstellung von Vorformlingen aus Faserverbund-Halbzeugen und Harz aus Gelege-Schichten vorgegebener Form nach einem der voranstehenden Ansprüche, **dadurch gekennzeichnet, dass** die Arbeitsfläche (60) mit einer Harz-Schicht versehen ist, um das Gelege (3) während ihrer Umformung zu fixieren.

10. Verfahren zur Herstellung von Vorformlingen aus Faserverbund-Halbzeugen und Harz aus Gelege-Schichten vorgegebener Form nach einem der voranstehenden Ansprüche, **dadurch gekennzeichnet, dass** das Material der Harz-Schicht (30) dem Bauteilharz entsprechen.

11. Verfahren zur Herstellung von Vorformlingen aus Faserverbund-Halbzeugen und Harz aus Gelege-Schichten vorgegebener Form nach einem der voranstehenden Ansprüche, **dadurch gekennzeichnet, dass** das Material der Harz-Schicht (30) mit dem Bauteilharz verträglich reagiert.

12. Verfahren zur Herstellung von Vorformlingen aus Faserverbund-Halbzeugen und Harz aus Gelege-Schichten vorgegebener Form nach einem der voranstehenden Ansprüche, **dadurch gekennzeichnet, dass** eine Preform (1) aus einer Mehrzahl von Pre-Preformen zusammengesetzt wird.

13. Vorformling aus Faserverbund-Halbzeugen (10), welche nach einem Verfahren gemäß einem der vorstehenden Ansprüchen hergestellt ist.
